# EUROPÄISCHE PATENTSCHRIFT

(11) **EP 1 167 742 B1**
(45) Veröffentlichungstag und Bekanntmachung des Hinweises auf die Patenterteilung: **03.03.2004**
(21) Anmeldenummer: 01114310.4
(22) Anmeldetag: 13.06.2001
(51) Int. Cl.: F02M 35/024, B60H 3/06, B01D 46/42

(54) **Ansaugluftfilter**
Air intake filter
Filtre à air d'aspiration

(30) Priorität: 22.06.2000 US 213238 P
(43) Veröffentlichungstag der Anmeldung: 02.01.2002
(73) Patentinhaber: Mann + Hummel GmbH, 71638 Ludwigsburg (DE)
(72) Erfinder: Willig, Michael, 71638 Ludwigsburg (DE); Rumpp, Stefan, 72622 Nürtingen (DE)
(74) Vertreter: Voth, Gerhard, Dipl.-Ing.

(56) Entgegenhaltungen:
- DE-A- 4 326 731
- DE-C- 762 759
- US-A- 4 995 891
- US-A- 5 968 215

## Beschreibung

Die Erfindung betrifft eine Filterstruktur, die insbesondere in den Motorraum eines Fahrzeugs eingebaut werden kann.

Erfindungsgemäß wird vorgesehen, dass die Gehäusestruktur des Motorluftfilters und des Innenraumluftfilters des Fahrzeugs in einer Baueinheit zusammengefaßt sind. Diese Gestaltung erweist sich als vorteilhaft bei der Montage der Baugruppe im Motorraum. Diese kann vorher vollständig vormontiert werden. Allerdings ist auch eine Montage der Einzelteile nacheinander im Motorraum möglich.

Insgesamt werden Bauteile eingespart sowie das Bauteilgewicht durch Einsparung von Material verringert. Gleichzeitig können die ausgebildeten Gehäusestrukturen trotz einer Materialeinsparung steifer ausgeführt werden, da zwischen den Gehäusestrukturen Stabilisierungseffekte auftreten, dabei kann die Gehäusestruktur vorteilhaft einteilig ausgeführt sein. Die Gehäusestrukturen von Innenraumfilter und Motorluftfilter können jedoch auch als gesonderte Gehäusestrukturen ausgeführt sein, welche aneinander montierbar sind. Die Baugruppe verbraucht zuletzt auch weniger Einbauraum im Motorraum des Fahrzeugs, wodurch die erfindungsgemäße Struktur auch in beengten Einbauverhältnissen Platz findet.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: eine Baueinheit, bestehend aus Ansaugluftfilter und Innenraumluftfilter, in perspektivischer Ansicht,
- Figur 2: den Einbau der Baueinheit gemäß Figur 1 im Motorraum vor der Windschutzscheibe in perspektivischer Ansicht,
- Figur 3: den Ansaugluftfilter gemäß Figur 1 als Aufsicht,
- Figur 4: den Ansaugluftfilter gemäß Figur 3 in der teilweise aufgeschnittenen Seitenansicht,
- Figur 5: den Innenraumluftfilter gemäß Figur 1 als Einzelteil in perspektivischer Ansicht,
- Figur 6: eine andere perspektivische Ansicht des Innenraumluftfilters gemäß Figur 5 und
- Figur 7: eine Schnittdarstellung des Innenraumluftfilters gemäß Figur 5

### Beschreibung der Ausführungsbeispiele

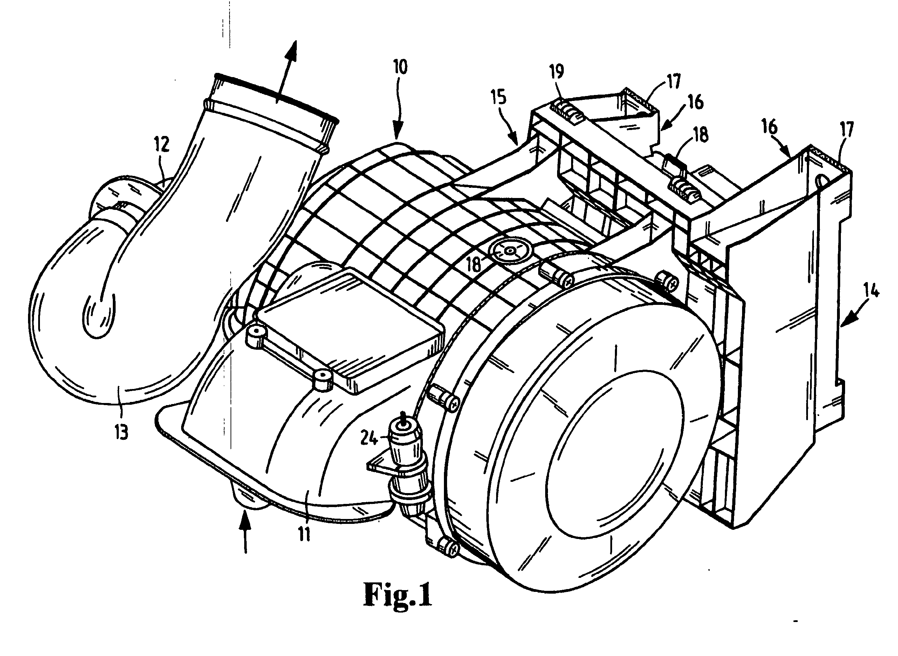

In Figur 1 ist ein Ansaugluftfilter 10 dargestellt, der einen Ansauglufteinlass 11 und einen Ansaugluftauslass 12 für die Verbrennungsluft einer Brennkraftmaschine (nicht dargestellt) aufweist. An den Ansaugluftauslass ist ein Schlauch 13 aus Elastomer angebracht, der zur Leitung der Ansaugluft zu der Brennkraftmaschine dient.

Weiterhin ist ein Innenraumluftfilter 14 dargestellt, wobei Ansaugluftfilter und Innenraumluftfilter über eine lösbare Verbindung 15 zu einer Baueinheit verbunden sind. Der Innenraumluftfilter weist weiterhin Mittel zur Befestigung 16 der gesamten Baueinheit im Motorraum eines Fahrzeugs auf, die durch Flansche 17 für nicht dargestellte Halteschrauben ausgeführt sind.

Die Baueinheit ist in einer Ansicht von unten dargestellt. Zu erkennen sind zwei Anschlüsse 18, welche zur Entsorgung des sich in den Gehäusestrukturen ansammelden Wassers geeignet sind. Außerdem ist zu erkennen, dass die lösbare Verbindung zwischen Ansaugluftfilter 10 und Innenraumluftfilter 14 im unteren Bereich durch eine Hakenverbindung 19 realisiert ist.

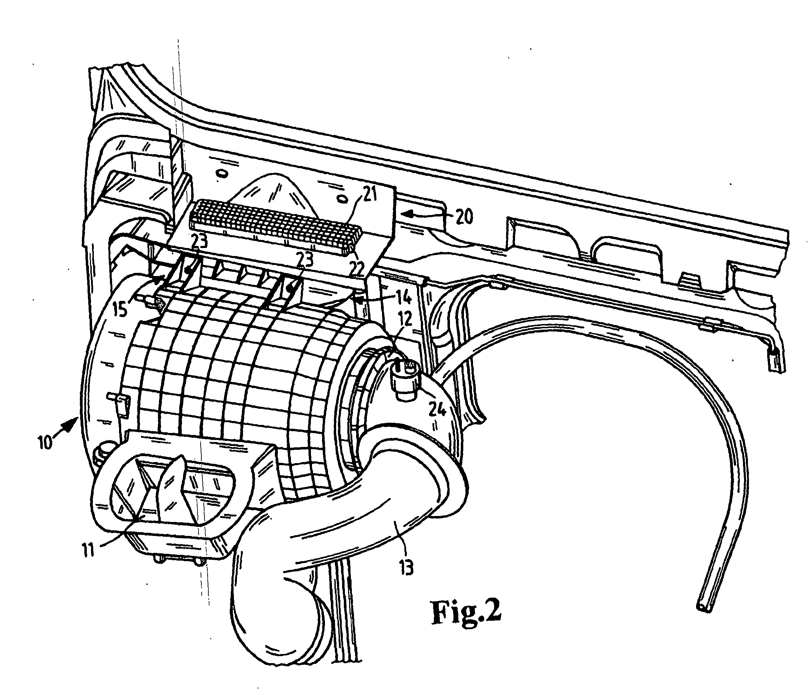

In Figur 2 ist die gesamte Baueinheit am Einbauort dargestellt. Der Einbauort ist die Begrenzungswand eines Fahrgastraumes eines Lastkraftwagens direkt unter der Windschutzscheibe. Zu erkennen ist weiterhin ein Deckel 20, der zum Abschluß des Innenraumluftfilters 14 dient und über ein Gitter 21 gleichzeitig einen Raumlufteinlass 22 bildet. Außerdem ist die gegenüber liegende Seite der lösbaren Verbindung 15 zu erkennen, welche als Schraubverbindung 23 ausgeführt ist.

Die bereits zu Figur 1 erklärten Bauteile sind mit den gleichen Bezugsziffem versehen und werden hier nicht näher erläutert. An beiden Luftfiltern können weitere Bauteile, wie z. B. Meßfühler 24 angebracht sein.

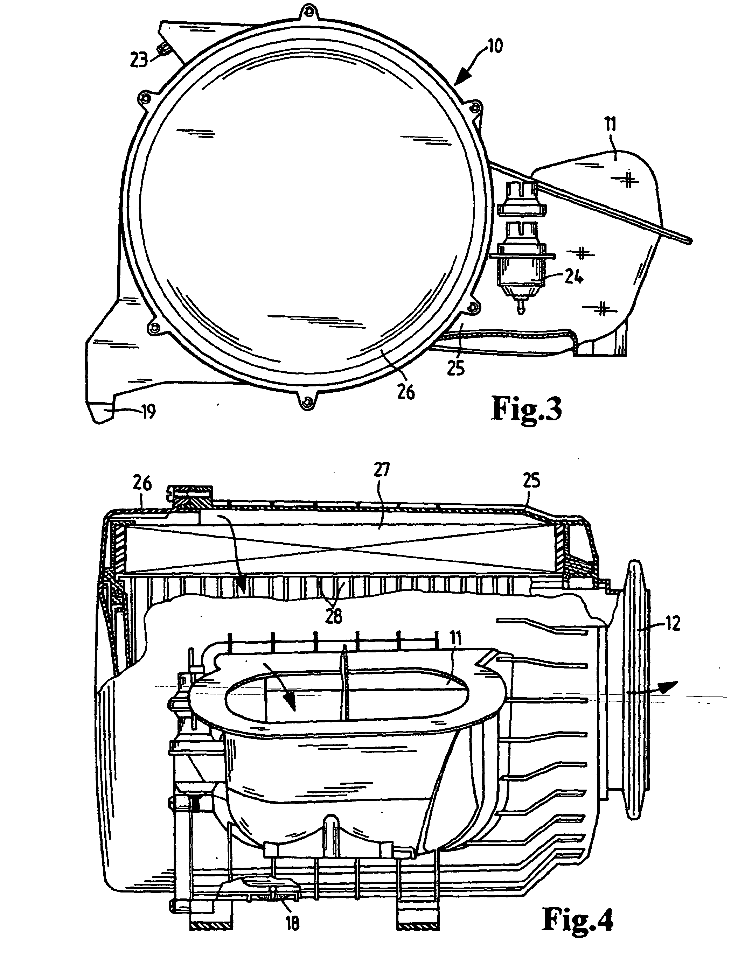

Die Figuren 3 und 4 stellen den Ansaugluftfilter 10 genauer dar. Dieser bildet für die Baueinheit eine erste Gehäusestruktur 25 mit einem Gehäusedeckel 26, wobei die Gehäusestruktur mit dem Innenraumluftfilter 14 (nicht dargestellt) in der bereits beschriebenen Weise über die Hakenverbindung 19 und die Schraubverbindung 23 zur Baueinheit zusammengeschlossen werden kann.

In der geschnittenen Darstellung wird deutlich, dass die mit dem Gehäusedeckel 26 verschlossene erste Gehäusestruktur 25 ein erstes Filterelement 27 einschließt, welches mit einem Stützrohr 28 versehen ist. Weiterhin ist der Anschluss 18 für die Wasserentsorgung erkennbar.

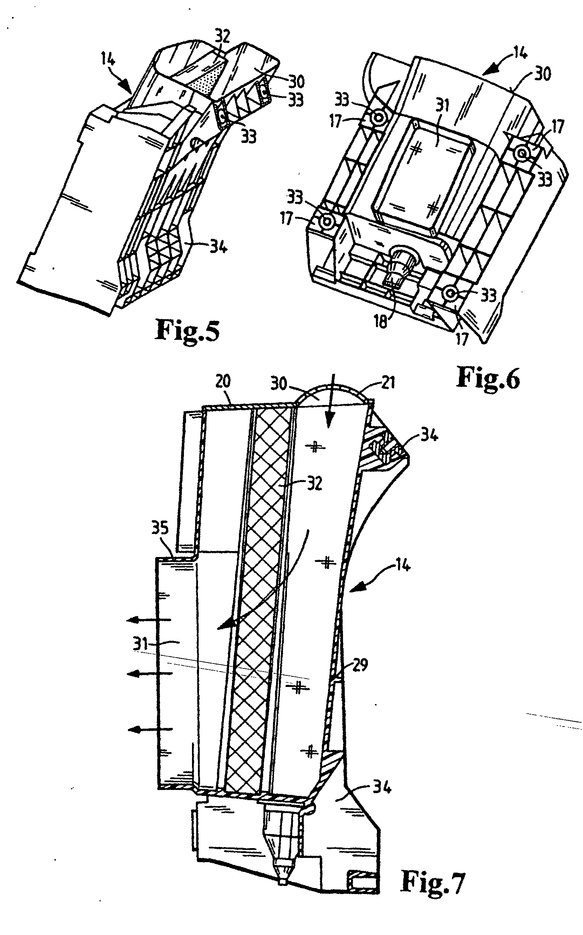

Die Figuren 5 und 6 stellen die zweite Gehäusestruktur 29, die den Innenraumluftfilter 14 bildet, dar. Auch diese Gehäusestruktur weist einen Raumlufteinlass 30 und einen Raumluftauslass 31 auf. In Inneren ist ein zweites Filterelement 32 angeordnet, welches zur Filterung der Raumluft für die Fahrgastkabine des Lastkraftwagens dient.

Die Flansche 17 enthalten außerdem elastische Elemente, die eine mechanische Entkopplung 33 darstellen. An dieser mechanischen Entkopplung wird der Innenraumluftfilter im Motorraum des Lastkraftwagens aufgehängt, wodurch eine Schwingungsinsolation erfolgt. Weiterhin sind an der Gehäusestruktur Aufnahmen 34 für die Hakenverbindung 19 und die Schraubverbindung 23 des Ansaugluftfilters (nicht dargestellt) vorgesehen. Diese bilden die Schnittstellen, die für eine Zusammenfassung von Ansaugluftfilter 10 und Innenraumluftfilter 14 zu einer Baueinheit führen. Zuletzt ist der Anschluss 18 für die Wasserentsorgung zu erkennen.

Figur 7 stellt den Innenraumluftfilter im Schnitt dar. Es ist weiterhin der Deckel 20 zu erkennen, der den Raumlufteinlass 30 mit dem Gitter 21 abdeckt. Der Luftstrom ist genauso wie in Figur 4 durch Pfeile angedeutet. Der Raumluftauslass 31 bildet gleichzeitig einen kurzen Kanalabschnitt 35, der direkt zu einem Anschluss an das Innenraumbelüftungssystem der Fahrgastzelle führt (vergleiche Figur 2). Dieser ist ebenfalls in die Baueinheit integriert.

## Patentansprüche

1. Ansaugluftfilter (10) für eine Brennkraftmaschine, welcher eine erste Gehäusestruktur (25) aufweist, in die ein erstes Filterelement (27) zwischen einem Ansauglufteinlass (11) und einem Ansaugluftauslass (12) angeordnet ist, **dadurch gekennzeichnet, dass** der Ansaugluftfilter eine Baueinheit mit einem Inneneraumfilter (14), welcher eine zweite Gehäusestruktur (29) aufweist, in die ein zweites Filterelement (32) zwischen einem Raumlufteinlass (30) und einem Raumluftauslass (31) angeordnet ist, bildet.

2. Ansaugluftfilter nach Anspruch 1, **dadurch gekennzeichnet, dass** die erste Gehäusestruktur (25) und die zweite Gehäusestruktur (29) ein gemeinsames Bauteil aufweisen, welches beide Gehäusestrukturen zumindest teilweise bildet.

3. Ansaugluftfilter nach Anspruch 1, **dadurch gekennzeichnet, dass** die erste Gehäusestruktur (25) und die zweite Gehäusestruktur (29) über eine lösbare Verbindung (15) miteinander verbunden sind.

4. Ansaugluftfilter nach Anspruch 3, **dadurch gekennzeichnet, dass** die lösbare Verbindung (15) aus einer Kombination einer Hakenverbindung (19) und einer Schraubverbindung (23) besteht.

5. Ansaugluftfilter nach einem der Ansprüche 3 oder 4, **dadurch gekennzeichnet, dass** Mittel zur Befestigung (16) der gesamten Baueinheit am Einbauort lediglich an einer der beiden Gehäusestrukturen angebracht sind.

6. Ansaugluftfilter nach Anspruch 5, **dadurch gekennzeichnet, dass** der Ansaugluftfilter (10) ein Standardbauteil ist und der Innenraumluftfilter (14) die Mittel zur Befestigung (16) der ganzen Baueinheit am Einbauort und einen Standardanschluss für die lösbare Verbindung (15) zwischen Innenraumluftfilter und Ansaugluftfilter aufweist.

7. Ansaugluftfilter nach einem der vorherigen Ansprüche, **dadurch gekennzeichnet, dass** in die Mittel zur Befestigung (16) der gesamten Baueinheit am Einbauort eine mechanische Entkopplung (33) integriert ist.

8. Ansaugluftfilter nach einem der vorherigen Ansprüche, **dadurch gekennzeichnet, dass** in mindestens einer der beiden Gehäusestrukturen ein Anschluss zur Wasserentsorgung vorgesehen ist.

9. Ansaugluftfilter nach einem der vorherigen Ansprüche, **dadurch gekennzeichnet, dass** in mindestens eine der beiden Gehäusestrukturen ein Kanalabschnitt (35) zur Durchleitung des Ansaugluftstromes oder des Innenraumluftstromes integriert ist.

10. Ansaugluftfilter nach Anspruch 9, **dadurch gekennzeichnet, dass** der Kanalabschnitt aus der Innenraumluftzuführung für die Fahrkabine des Fahrzeugs besteht.

## Claims

1. Intake air filter (10) for an internal combustion engine, which filter includes a first housing structure (25) in which there is disposed a first filter element (27) between an intake air inlet (11) and an intake air outlet (12), **characterised in that** the intake air filter forms a structural unit with an interior filter (14), which includes a second housing structure (29) in which there is disposed a second filter element (32) between an ambient air inlet (30) and an ambient air outlet (31).

2. Intake air filter according to claim 1, **characterised in that** the first housing structure (25) and the second housing structure (29) have a common component part which at least partially forms both housing structures.

3. Intake air filter according to claim 1, **characterised in that** the first housing structure (25) and the second housing structure (29) are interconnected via a detachable connection (15).

4. Intake air filter according to claim 3, **characterised in that** the detachable connection (15) comprises a combination of a hook connection (19) and a screw connection (23).

5. Intake air filter according to one of claims 3 or 4, **characterised in that** means (16) for securing the entire structural unit at the installation location are only mounted on one of the two housing structures.

6. Intake air filter according to claim 5, **characterised in that** the intake air filter (10) is a standard component part, and the interior air filter (14) includes the means (16) for securing the entire structural unit at the installation location and a standard connector for the detachable connection (15) between the interior air filter and the intake air filter.

7. Intake air filter according to one of the previous claims, **characterised in that** a mechanical uncoupling means (33) is incorporated in the means (16) for securing the entire structural unit at the installation location.

8. Intake air filter according to one of the previous claims, **characterised in that** a connector for the removal of water is provided in at least one of the two housing structures.

9. Intake air filter according to one of the previous claims, **characterised in that** a duct portion (35) is incorporated in at least one of the two housing structures for the flow of intake air or the flow of interior air to be conducted therethrough.

10. Intake air filter according to claim 9, **characterised in that** the duct portion comprises the interior air supply means for the passenger compartment of the vehicle.

## Revendications

1. Filtre à air d'admission (10) pour un moteur à combustion interne qui présente une première structure de boîtier (25) dans laquelle un premier élément filtrant (27) est disposé entre une entrée d'air d'admission (11) et une sortie d'air d'admission (12),
**caractérisé en ce que**
le filtre à air d'admission comprend une unité modulaire comportant un filtre de chambre intérieure (14) qui présente une deuxième structure de boîtier (29) dans laquelle un deuxième élément filtrant (32) est disposé entre une entrée d'air de chambre (30) et une sortie d'air de chambre (31).

2. Filtre à air d'admission selon la revendication 1,
**caractérisé en ce que**
la première structure de boîtier (25) et la deuxième structure de boîtier (29) présentent un élément commun qui forme au moins partiellement les deux structures de boîtier.

3. Filtre à air d'admission selon la revendication 1,
**caractérisé en ce que**
la première structure de boîtier (25) et la deuxième structure de boîtier (29) sont reliées l'une à l'autre par une liaison démontable (15).

4. Filtre à air d'admission selon la revendication 3,
**caractérisé en ce que**
la liaison démontable (15) est constituée par une combinaison d'une liaison à crochet (19) et d'une liaison à vis (23).

5. Filtre à air d'admission selon une des revendications 3 ou 4,
**caractérisé en ce qu'**
il n'est prévu des moyens pour la fixation (16) de l'unité modulaire complète sur le site de montage que sur une des deux structures de boîtier.

6. Filtre à air d'admission selon la revendication 5,
**caractérisé en ce que**
le filtre à air d'admission (10) est un élément standard et le filtre à air de chambre intérieure (14) présente les moyens pour la fixation (16) de l'unité modulaire complète sur le site de montage et un raccordement standard pour la liaison démontable (15) entre le filtre à air de chambre intérieure et le filtre à air d'admission.

7. Filtre à air d'admission selon une des revendications précédentes,
**caractérisé en ce qu'**
un découplage mécanique (33) est intégré dans les moyens pour la fixation (16) de l'unité modulaire complète sur le site de montage.

8. Filtre à air d'admission selon une des revendications précédentes,
**caractérisé en ce que**
dans au moins une des deux structures de boîtier, est prévu un raccordement pour l'élimination de l'eau.

9. Filtre à air d'admission selon une des revendications précédentes,
**caractérisé en ce que**
dans au moins une des deux structures de boîtier est intégré un segment de conduit (35) servant à conduire le flux d'air d'admission ou le flux d'air de chambre intérieure.

10. Filtre à air d'admission selon la revendication 9,
**caractérisé en ce que**
le segment de conduit est constitué par l'amenée d'air de chambre intérieure pour l'habitacle du véhicule.
